(19) Europäisches Patentamt
European Patent Office
Office européen des brevets

(11) **EP 4 094 903 A1**

(12) **EUROPÄISCHE PATENTANMELDUNG**

(43) Veröffentlichungstag:
**30.11.2022   Patentblatt 2022/48**

(21) Anmeldenummer: **22175265.2**

(22) Anmeldetag: **24.05.2022**

(51) Internationale Patentklassifikation (IPC):
**B25J 9/16** *(2006.01)*

(52) Gemeinsame Patentklassifikation (CPC):
**B25J 9/1674;** B25J 9/1607; G05B 2219/39412;
G05B 2219/39413; G05B 2219/39529;
G05B 2219/40527; G05B 2219/40582;
G05B 2219/40599; G05B 2219/42156

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.05.2021   DE 102021113636**

(71) Anmelder: **Deutsches Zentrum für Luft- und Raumfahrt e.V.**
**53227 Bonn (DE)**

(72) Erfinder:
• **Iskander, Maged**
**82234 Weßling (DE)**
• **Dietrich, Dr.-Ing. Alexaner**
**82234 Weßling (DE)**
• **Albu-Schäffer, Dr.-Ing. Alin**
**82234 Weßling (DE)**

(74) Vertreter: **Ege Lee & Roider Patentanwälte**
**Walter-Gropius-Straße 15**
**80807 München (DE)**

(54) **VERFAHREN ZUM BESTIMMEN EXTERNER INTERAKTIONSKRÄFTE UND/ODER INTERAKTIONSMOMENTE EINES ROBOTERS, ROBOTER UND COMPUTERPROGRAMMPRODUKT**

(57)     Verfahren zum Bestimmen externer Interaktionskräfte und/oder Interaktionsmomente eines Roboters (100) mithilfe wenigstens eines realen Kraft- und/oder Momentsensors und eines virtuellen Modells des wenigstens einen Kraft- und/oder Momentsensors, wobei der wenigstens eine reale Kraft- und/oder Momentsensor als passives mechanisch gebundenes Gelenk (112) zusammen mit einer Roboterdynamik und einer Roboterkinematik modelliert wird sowie Roboter (100) und Computerprogrammprodukt zum Ausführen eines derartigen Verfahrens.

Fig. 1

EP 4 094 903 A1

**Beschreibung**

Die Erfindung betrifft ein Verfahren zum Bestimmen externer Interaktionskräfte und/oder Interaktionsmomente eines Roboters mithilfe wenigstens eines realen Kraft- und/oder Momentsensors und eines Modells des wenigstens einen Kraft- und/oder Momentsensors. Außerdem betrifft die Erfindung einen Roboter mit wenigstens einem Glied, wenigstens einem Gelenk, wenigstens einem Kraft- und/oder Momentsensor und einer Kontrolleinrichtung. Außerdem betrifft die Erfindung ein Computerprogrammprodukt.

Die Veröffentlichung "Vorndamme, Jonathan, Moritz Schappler, and Sami Haddadin. "Collision detection, isolation and identification for humanoids." In 2017 IEEE International Conference on Robotics and Automation (ICRA), pp. 4754-4761. IEEE, 2017." betrifft die Phasen Kollisionserkennung, Isolierung und Identifizierung bei einem Kollisionshandling für humanoide Roboter. Vorgeschlagen wird ein einheitlicher Echtzeit-Algorithmus zur Bestimmung von unbekannten Kontaktkräften und Kontaktpositionen für humanoide Roboter, der nur auf propriozeptiver Erfassung basiert, d. h. auf Gelenkposition, Geschwindigkeit und Drehmoment sowie auf Kraft-/ Drehmomenterfassung entlang der Struktur. Das vorgeschlagene Schema basiert auf nichtlinearen modellbasierten Impulsbeobachtern, die in der Lage sind, die unbekannten Kontaktkräfte und die jeweiligen Positionen zu ermitteln. Die dynamischen Lasten, die auf die Kraft-/Drehmomentsensoren wirken, werden ebenfalls auf der Basis eines neuartigen nichtlinearen Kompensators korrigiert.

Die Veröffentlichung "Buondonno, G. and De Luca, A., 2016, October. "Combining real and virtual sensors for measuring interaction forces and moments acting on a robot." In 2016 IEEE/RSJ International Conference on Intelligent Robots and Systems (IROS) (pp. 794-800). IEEE." betrifft eine Kombination von realen und virtuellen Sensoren zur Messung von auf einen Roboter wirkenden Interaktionskräften und - momenten und insbesondere das Problem der Schätzung eines externen Stoßes, der entlang der Struktur eines Robotermanipulators wirkt, zusammen mit einer Kontaktposition, an der die externe Kraft angreift. Dazu wird ein kombinierter Einsatz eines an einer Roboterbasis montierten Kraft-/Drehmomentsensors und eines modellbasierten virtuellen Sensors betrachtet. Der virtuelle Sensor wird durch einen Residualvektor bereitgestellt, der üblicherweise zur Kollisionserkennung und - isolierung in der Mensch-Roboter-Interaktion verwendet wird. Durch Integration der beiden Arten von Messwerkzeugen wird eine effiziente Schätzung aller unbekannten Größen ermöglicht, wobei auch der rekursive Newton-Euler-Algorithmus für dynamische Berechnungen verwendet wird. Es werden verschiedene Betriebsbedingungen betrachtet, darunter die Sonderfälle der punktweisen Interaktion (reine Kontaktkraft), des bekannten Kontaktortes und eines Basissensors, der nur Kräfte misst, sowie die Bedingungen für eine korrekte Schätzung, die vollständig virtuell ist, d. h. ohne Rückgriff auf einen Kraft-/Drehmomentsensor.

Der Erfindung liegt die Aufgabe zugrunde, ein eingangs genanntes Verfahren strukturell und/oder funktionell zu verbessern. Außerdem liegt der Erfindung die Aufgabe zugrunde, einen Roboter bereit zu stellen, mit dem das erfindungsgemäße Verfahren ausführbar ist. Außerdem liegt der Erfindung die Aufgabe zugrunde, ein Computerprogrammprodukt bereit zu stellen, mit dem das erfindungsgemäße Verfahren ausführbar ist.

Die Aufgabe wird gelöst mit einem Verfahren mit den Merkmalen des Anspruchs 1. Außerdem wird die Aufgabe gelöst mit einem Roboter mit den Merkmalen des Anspruchs 14. Außerdem wird die Aufgabe gelöst mit einem Computerprogrammprodukt mit den Merkmalen des Anspruchs 15. Vorteilhafte Ausführungen und/oder Weiterbildungen sind Gegenstand der abhängigen Ansprüche.

Das Verfahren kann in Zusammenhang mit einem Kontrollieren des Roboters ausgeführt werden. "Kontrollieren" bezeichnet in diesem Zusammenhang vorliegend insbesondere ein regelungstechnisches und/oder steuerungstechnisches Kontrollieren. Das Verfahren kann in Zusammenhang mit einer Kollisionserkennung und -lokalisierung ausgeführt werden. Das Verfahren kann in Zusammenhang mit einer absichtlichen Interaktion durch einen Benutzer ausgeführt werden. Das Verfahren kann in Zusammenhang mit einem Ausführen einer Aufgabe durch den Roboter ausgeführt werden. Das Verfahren kann mithilfe eines regelungstechnischen Beobachters oder in einem regelungstechnischen Beobachter umgesetzt sein/werden. Insofern kann die Erfindung auch einen regelungstechnischen Beobachter betreffen. Das Verfahren kann als Computerprogramm implementiert sein.

Der Roboter kann eine Roboterkinematik und eine Roboterdynamik aufweisen. Der Roboter kann mithilfe eines kinematischen Modells und/oder mithilfe eines dynamischen Modells beschreibbar oder darstellbar sein. Die Roboterkinematik kann einen mechanischen Aufbau des Roboters beschreiben oder darstellen. Das kinematische Modell des Roboters kann eine Beschreibung oder Darstellung einer Anzahl und Anordnung von Roboterachsen, eine Beschreibung einer Bewegungsform der Roboterachsen und/oder eine Beschreibung oder Darstellung eines Roboterarbeitsraums umfassen. Das kinematische Modell des Roboters kann Bewegungen des Roboters rein geometrisch mit den Größen Zeit, Ort, Geschwindigkeit und Beschleunigung beschrieben oder darstellen. Das dynamische Modell des Roboters kann eine Beschreibung interner Kräfte und/oder Momente des Roboters und/oder deren Wirkung umfassen. Das dynamische Modell des Roboters kann eine Beschreibung von Roboterbewegungen in ihrer Abhängigkeit von einwirkenden internen Kräften und/oder Momenten des Roboters umfassen. Das dynamische Modell des Roboters kann ein zeitliches Verhalten des Roboters und der Bewegungsgleichungen, die ihm zugrunde liegen, beschreiben. Dem Roboter kann wenigstens ein räumliches Koordinatensystem zugeordnet sein. Das wenigstens eine Koordinatensystem kann ein Basiskoordinatensystem, ein Werkzeugkoordinatensystem, ein Werkstückkoordinatensystem und/oder ein Bezugskoordinatensystem sein. Das wenigstens eine räumliche Koordinatensystem kann ein kartesisches Koordinatensystem mit drei Achsen sein.

Der Roboter kann ein von einem regelungstechnischen Beobachter beobachtetes Referenzsystem sein. Der regelungstechnische Beobachter kann dazu ausgelegt sein, aus bekannten Eingangsgrößen, wie Stellgrößen oder messbaren Störgrößen, und Ausgangsgrößen oder Messgrößen des Roboters nicht messbare Größen oder Zustände zu rekonstruieren.

Externe Interaktionskräfte und/oder Interaktionsmomente des Roboters können Kräfte und/oder Momente sein, die aus einer Wechselwirkung des Roboters mit seiner Umgebung resultieren. Die Bezeichnung "externe Interaktionskräfte und/oder Interaktionsmomente des Roboters" kann zur Abgrenzung dieser externen Kräfte und/oder Momente gegenüber internen Kräften und/oder Momenten, die aus einer Roboterdynamik resultieren, dienen.

Der wenigstens eine reale Kraft- und/oder Momentsensor kann ein Kraft- und/oder Momentsensor des Roboters sein. Der wenigstens eine reale Kraft- und/oder Momentsensor kann ein tatsächlich vorhandener Sensor sein. Der wenigstens eine reale Kraft- und/oder Momentsensor kann dazu ausgelegt sein, Kräfte in wenigstens einer Translationsrichtung und/oder Momente in wenigstens einer Rotationsrichtung aufzunehmen. Der wenigstens eine reale Kraft- und/oder Momentsensor kann dazu ausgelegt sein, Kräfte in einer Translationsrichtung, Kräfte in zwei Translationsrichtungen, Kräfte in drei Translationsrichtungen, Momente in einer Rotationsrichtung, Momente in zwei Rotationsrichtungen und/oder Momente in drei Rotationsrichtungen aufzunehmen. Der wenigstens eine reale Kraft- und/oder Momentsensor kann zur Aufnahme in einer Richtung, in zwei Richtungen, in drei Richtungen, in vier Richtungen, in fünf Richtungen oder in sechs Richtungen ausgelegt sein.

Ein passives Gelenk kann ein nicht aktuiertes Gelenk sein. Ein passives Gelenk kann Gelenk sein, das zwei Glieder miteinander passiv beweglich verbindet. Ein mechanisch gebundenes Gelenk kann ein zwangsgeführtes Gelenk sein. Ein mechanisch gebundenes Gelenk kann ein Gelenk sein, das zwei zwangsgeführte Glieder miteinander beweglich verbindet. Das passive mechanisch gebundene Gelenk kann ein Modell des wenigstens einen realen Kraft- und/oder Momentsensors sein. Das passive mechanisch gebundene Gelenk kann auch als virtuelles Gelenk bezeichnet werden. Das Modell des wenigstens einen realen Kraft- und/oder Momentsensors kann ein, gegebenenfalls vereinfachtes, Abbild des wenigstens einen Kraft- und/oder Momentsensors sein. Das Modell des wenigstens einen realen Kraft- und/oder Momentsensors kann ein mathematisches Modell sein. Das Modell des wenigstens einen realen Kraft- und/oder Momentsensors kann dem wenigstens einen Kraft- und/oder Momentsensor regelungstechnisch nachführbar sein.

Der wenigstens eine Kraft- und/oder Momentsensor kann als passives mechanisch gebundenes Gelenk mit einem einer Anzahl von Aufnahmerichtungen des wenigstens einen Kraft- und/oder Momentsensors entsprechenden Freiheitsgrad (DOF, Degree of Freedom) modelliert werden. Der wenigstens eine Kraft- und/oder Momentsensor kann als passives mechanisch gebundenes Gelenk mit einem Freiheitsgrad f=1, mit einem Freiheitsgrad f=2, mit einem Freiheitsgrad f=3, mit einem Freiheitsgrad f=4, mit einem Freiheitsgrad f=5 oder mit einem Freiheitsgrad f=6, modelliert werden. Ein Kraft- und/oder Momentsensor zur Aufnahme in einer Richtung kann als passives mechanisch gebundenes Gelenk mit einem Freiheitsgrad f=1 modelliert werden. Ein Kraft- und/oder Momentsensor zur Aufnahme in zwei Richtungen kann als passives mechanisch gebundenes Gelenk mit einem Freiheitsgrad f=2 modelliert werden. Ein Kraft- und/oder Momentsensor zur Aufnahme in drei Richtungen kann als passives mechanisch gebundenes Gelenk mit einem Freiheitsgrad f=3 modelliert werden. Ein Kraft- und/oder Momentsensor zur Aufnahme in vier Richtungen kann als passives mechanisch gebundenes Gelenk mit einem Freiheitsgrad f=4 modelliert werden. Ein Kraft- und/oder Momentsensor zur Aufnahme in fünf Richtungen kann als passives mechanisch gebundenes Gelenk mit einem Freiheitsgrad f=5 modelliert werden. Ein Kraft- und/oder Momentsensor zur Aufnahme in sechs Richtungen kann als passives mechanisch gebundenes Gelenk mit einem Freiheitsgrad f=6 modelliert werden.

Eine reale Roboterdynamik kann als virtuelle Roboterdynamik modelliert werden. Eine reale Roboterkinematik kann als virtuelle Roboterkinematik modelliert werden. Der wenigstens eine virtuelle Kraft- und/oder Momentsensor kann zusammen mit einer virtuellen Roboterdynamik und einer virtuellen Roboterkinematik modelliert werden.

Der wenigstens eine Kraft- und/oder Momentsensor und/oder das Modell des wenigstens einen Kraft- und/oder Momentsensor können/kann wenigstens einer vorgegebenen Stelle am Roboter zugeordnet sein. Das Modell des wenigstens einen Kraft- und/oder Momentsensor kann einer Benutzerschnittstelle, einer kinematischen Roboterstruktur und/oder einem Endeffektor zugeordnet sein. Die kinematische Roboterstruktur kann eine Basis, wenigstens ein Glied, wenigstens ein Gelenk und/oder einen Endeffektor aufweisen. Die Roboterstruktur kann eine offene kinematische Kette bilden. Die Basis kann ein festes Ende der kinematischen Kette bilden. Die Basis kann einem Standort des Roboters zugeordnet sein. Der Basis kann ein Basiskoordinatensystem zugeordnet sein. Der Endeffektor kann ein freies Ende der kinematischen Kette bilden. Die kinematische Roboterstruktur kann mithilfe der Roboterkinematik beschreibbar oder darstellbar sein.

Das Verfahren kann dynamisch unter Entfall einer Beschleunigungsmessung, Beschleunigungsschätzung oder Beschleunigungsrekonstruktion durchgeführt werden. Eine Inversion einer Massenmatrix kann entfallen.

Ein regelungstechnischer Beobachter kann mithilfe verallgemeinert definierter Koordinaten und eines dynamischen Modells des Roboters dargestellt werden.

Um die Roboterdynamik zusammen mit dem Modell des wenigstens einen Kraft- und/oder Momentsensor zu modellieren, können die Koordinaten des Roboters verallgemeinert als

$$\bar{q} = \begin{bmatrix} q_{\mathrm{b}} \\ q \\ q_{\mathrm{ui}} \\ q_{\mathrm{ee}} \end{bmatrix}$$

definiert werden, wobei $q_b \in \mathfrak{R}^{n_b}$ die Koordinaten sind, um einen an der Basis angeordneten realen Kraft- und/oder Momentsensor, der auch als Basissensor bezeichnet werden kann, zu berücksichtigen. Im Fall $n_b = 6$ handelt es sich um einen Kraft- und/oder Momentsensor mit einem Freiheitsgrad f=6. Ähnlich verhält es sich für einen an einer Benutzerschnittstelle angeordneten Kraft- und/oder Momentsensor und/oder für einen an einem Endeffektor angeordneten Kraft- und/oder Momentsensor mit $q_{UI} \in \mathfrak{R}^{n_{UI}}$ bzw. $q_{ee} \in \mathfrak{R}^{n_{ee}}$. Die Koordinaten der betätigten Gelenke werden als $q \in \mathfrak{R}^n$ bezeichnet.

Durch Einführung dieser verallgemeinerten Koordinaten sind die Kraft- und/oder Momentsensoren nicht nur real vorhanden, sondern auch virtuell in einem dynamischen Modell des Roboters enthalten.

Das dynamische Modell des Roboters einschließlich des Modells des wenigstens einen Kraft- und/oder Momentsensors kann als

$$\bar{M}(\bar{q})\ddot{\bar{q}} + \bar{C}(\bar{q},\dot{\bar{q}})\dot{\bar{q}} + \bar{g}(\bar{q}) = H\tau + \bar{\tau}^{\mathrm{ext}} + A(\bar{q})^T \lambda \qquad (1)$$

$$A(\bar{q})\dot{\bar{q}} = 0 \qquad (2)$$

definiert werden, wobei der Term $A(\bar{q})^T \lambda$ die Zwangskräfte der zusätzlichen Gelenke darstellt und $\bar{M} \in \mathfrak{R}^{\bar{n} \times \bar{n}}$, $\bar{C} \in \mathfrak{R}^{\bar{n} \times \bar{n}}$ und $\bar{g} \in \mathfrak{R}^{\bar{n}}$ die Roboter-Massenmatrix, die Coriolis- und Zentrifugalmatrix und der Gravitationsvektor einschließlich des Modells des wenigstens einen Kraft- und/oder Momentsensors darstellen.

Weiterhin stellt $\bar{\tau} = H\tau$ die verallgemeinerten Betätigungskräfte dar und $\tau^{\mathrm{ext}} \in \mathfrak{R}^{\bar{n}}$ die erweiterten verallgemeinerten externen Kräfte:

$$\bar{\tau}^{\mathrm{ext}} = \begin{bmatrix} \tau^{\mathrm{ext}}_{\mathrm{b}} \\ \tau^{\mathrm{ext}} \\ \tau^{\mathrm{ext}}_{\mathrm{ui}} \\ \tau^{\mathrm{ext}}_{\mathrm{ee}} \end{bmatrix}$$

Externe Kräfte und/oder Momente an den Stellen *b, ui* und *ee* am Roboter können als

$$\tau^{\mathrm{ext}}_{\mathrm{b}} = \begin{bmatrix} f^{\mathrm{ext}}_{\mathrm{b}} \\ m^{\mathrm{ext}}_{\mathrm{b}} \end{bmatrix}, \ \tau^{\mathrm{ext}}_{\mathrm{ui}} = \begin{bmatrix} f^{\mathrm{ext}}_{\mathrm{ui}} \\ m^{\mathrm{ext}}_{\mathrm{ui}} \end{bmatrix}, \ \tau^{\mathrm{ext}}_{\mathrm{ee}} = \begin{bmatrix} f^{\mathrm{ext}}_{\mathrm{ee}} \\ m^{\mathrm{ext}}_{\mathrm{ee}} \end{bmatrix}$$

definiert werden, wobei $f^{\mathrm{ext}}_{\mathrm{b}}$, $f^{\mathrm{ext}}_{\mathrm{ui}}$, $f^{\mathrm{ext}}_{\mathrm{ee}} \in \mathbb{R}^3$ die Kraftkomponenten und $m^{\mathrm{ext}}_{\mathrm{b}}$, $m^{\mathrm{ext}}_{\mathrm{ui}}$, $m^{\mathrm{ext}}_{\mathrm{ee}} \in \mathbb{R}^3$ die Momentkomponenten repräsentiert, die an der Basis, an der Benutzerschnittstelle bzw. an dem Endeffektor wirken.

Ein erweitertes verallgemeinertes Moment des Roboters einschließlich des Modells des wenigstens einen Kraft- und/oder Momentsensors kann als

$$\bar{p} = \bar{M}(\bar{q})\dot{\bar{q}}$$

definiert werden, sodass eine Beobachterdynamik in der Form

$$\dot{\bar{p}} = \bar{\tau} - \bar{n}(\bar{q}, \dot{\bar{q}}) + \bar{r}(t) \tag{3}$$

$$\dot{\bar{r}} = \bar{K}_\text{o}(\dot{\bar{p}} - \dot{\hat{\bar{p}}}) \tag{4}$$

resultiert. Der Begriff "Beobachterdynamik" bezieht sich auf einen regelungstechnischen Beobachter und ein dynamisches Modell des Roboters.

In der Beobachterdynamik verwendete erweiterte Abtastgrößen können als

$$\bar{\tau} = \begin{bmatrix} \tau_\text{b} \\ \tau \\ \tau_\text{ui} \\ \tau_\text{ee} \end{bmatrix}$$

definiert werden. Die Variablen $\tau_\text{b}$, $\tau_\text{ui}$, und $\tau_\text{ee}$ repräsentieren Messaufnahmen an der Basis, an der Benutzerschnittstelle und am Endeffektor, $\tau$ ist ein Ko-Vektor der Gelenkmomente. Der erweiterte Residualvektor $\bar{r}(t)$ (Beobachterausgang) kann auf einfache Weise erhalten werden, indem man (3) in (4) einsetzt und über die Zeit integriert als

Durch Einsetzen von (3) in (4) kann mithilfe der resultierenden Form der Beobachterdynamik und durch Integration über die Zeit ein erweiterter Residualvektor

$$\bar{r}(t) = \bar{K}_\text{o}\left( \bar{p}(t) - \int_0^t (\bar{\tau} - \bar{n}(\bar{q}, \dot{\bar{q}}) + \bar{r})dt - \bar{p}(0) \right)$$

erhalten werden mit der diagonalen Verstärkungsmatrix des Beobachters $\bar{K}_o$ = diag($\bar{K}_{o,1}$, ..., $\bar{K}_{o,\bar{n}}$) und

$$\bar{n} = \bar{g} + \bar{C}\dot{\bar{q}} - \dot{\bar{M}}\dot{\bar{q}}$$ , wobei aus Gründen der Lesbarkeit auf eine Darstellung der Abhängigkeiten von den Zuständen verzichtet wurde.

Unter der Annahme eines genauen Modells der Dynamik kann eine Residualdynamik als

$$\dot{\bar{r}} = \bar{K}_\text{o}(\bar{\tau}^\text{ext} - \bar{r})$$

ausgedrückt werden $\bar{\tau}^\text{ext}$ elche eine Beziehung zwischen dem erweiterten Residualvektor und beschreibt. Sie kann als stabiler, linearer, entkoppelter Filter bzw. Schätzung erster Ordnung der externen verallgemeinerten Kräfte betrachtet werden.

Eine Beobachterdynamik kann in einem Laplace-Bereich als

$$\bar{r} = \frac{1}{(1/\bar{K}_\text{o})s + 1}\bar{\tau}^\text{ext}, \quad \bar{r}_i = \frac{1}{(1/\bar{K}_{\text{o},i})s + 1}\bar{\tau}_i^\text{ext} \tag{5}$$

ausgedrückt werden und eine komponentenweise Formulierung für $i$ = 1...$\bar{n}$ ist in (5) gegeben, was die vollständige Entkopplung der geschätzten Größen hervorhebt. Hier kann beim Schätzen der externen Interaktionskräfte und/oder Interaktionsmomente aus den zusätzlichen Kraft-/Momentsignalen eine Inversion der Trägheitsmatrix entfallen. Somit kann eine vollständig entkoppelte Schätzung für die externen Interaktionskräfte und/oder Interaktionsmomente und die externe Kräfte und/oder Momente erreicht werden. Darüber hinaus entfällt die Notwendigkeit der Schätzung einer Gelenkbeschleunigung. Auf diese Weise kann eine Erfassungsredundanz vollständig in den momentbasierten Beobachter für externen Interaktionskräfte und/oder Interaktionsmomente einbezogen werden, sodass eine isolierte Schätzung der externen Kräfte und/oder Momente mit Bezug auf die zusätzlichen Sensoren ermöglicht wird.

Die folgenden Berechnungen beziehen sich insbesondere auf einen Kontaktort und seine Intensität bzw. Größe für Einzel- und Mehrfachkontaktszenarien. Ein erweiterter Beobachter kann bereits im Aufgabenraum eine Schätzung für die externen Kräfte und/oder Momente liefern und diese konfigurationsunabhängig und singularitätsfrei machen.

Beispielsweise können vorbestimmte Orte von Interesse angenommen werden, um externe Interaktionskräfte, Interaktionsmomente, Kräfte und/oder Momente zu isolieren. Die externen Kräfte und/oder Momente an diesen Orten können durch die Adjunkte der Frame-Transformation auf die Roboterbasis abgebildet werden, um deren Darstellung zu vereinheitlichen. Ein der Basis zugeordneter Kraft- und/oder Momentsensor kann die gesamten Interaktionskräfte, Interaktionsmomente, Kräfte und/oder Momente erfassen und/oder messen, die an einem Standort oder an dem Boden abgestützt werden, und die gesamten externen Interaktionskräfte, Interaktionsmomente, Kräfte und/oder Momente wahrnehmen, die an der Basis zusammenlaufen, mit einer zusätzlichen Momentkomponente aufgrund der Veränderung des Hebelarms.

Entlang einer Roboterstruktur aufgebrachte resultierende externe Kräfte und/oder Momente können in einem Roboterbezugssystem als

$$\mathcal{B}\boldsymbol{\tau}_{\mathrm{r}}^{\mathrm{ext}} = \boldsymbol{\tau}_{\mathrm{b}}^{\mathrm{ext}} - \mathrm{Ad}_{g_{\mathcal{B}}^{\mathcal{U}\mathcal{I}}}^{T}\boldsymbol{\tau}_{\mathrm{ui}}^{\mathrm{ext}} - \mathrm{Ad}_{g_{\mathcal{B}}^{\mathcal{E}\mathcal{E}}}^{T}\boldsymbol{\tau}_{\mathrm{ee}}^{\mathrm{ext}} \qquad (6)$$

definiert werden, wobei

$$\mathcal{B}\boldsymbol{\tau}_{\mathrm{r}}^{\mathrm{ext}} = [\mathcal{B}\boldsymbol{f}_{\mathrm{r}}^{\mathrm{ext}T} \ \mathcal{B}\boldsymbol{m}_{\mathrm{r}}^{\mathrm{ext}T}]^{T}, \mathrm{Ad}_{g_{\mathcal{B}}^{\mathcal{U}\mathcal{I}}}$$

die Adjunkte der Transformation vom Basisraum $\mathcal{B}$ zum Benutzeroberflächenraum $\mathcal{U}\mathcal{I}$ und

$$\mathrm{Ad}_{g_{\mathcal{B}}^{\mathcal{E}\mathcal{E}}}$$

die Adjunkte zwischen den beiden Räumen $\mathcal{B}$ und $\mathcal{EE}$ ist. Außerdem stellen

$$\mathcal{B}\boldsymbol{f}_{\mathrm{r}}^{\mathrm{ext}} \in \mathbb{R}^3$$

und

$$\mathcal{B}\boldsymbol{m}_{\mathrm{r}}^{\mathrm{ext}} \in \mathbb{R}^3$$

die Kraft- bzw. Momentkomponenten dar, die auf die Struktur ausgeübt werden und im Basisraum ausgedrückt werden. In (6) wurden die äußeren Kräfte an den anderen Stellen der Interaktion (ui, ee) isoliert. Die Kontaktstelle kann unter der Annahme gefunden/bestimmt werden, dass das lokale Moment an der Kontaktstelle gleich Null ist, was der typische Fall für impulsive Kollisionen und externe Kräfte und/oder Momente ist. Diese Annahme gilt aber auch für viele Situationen in der Praxis. Der Kontaktpunkt entlang der Struktur kann mit Hilfe der erhaltenen externen Kräfte und/oder Momente aus (6) extrahiert werden.

Dementsprechend kann ein Vektor von einem Roboterbezugssystem bis zu einer Kraftwirkungslinie als

$$x_{\mathrm{r}} = -\boldsymbol{S}(\mathcal{B}\boldsymbol{f}_{\mathrm{r}}^{\mathrm{ext}})^{\#} \ \mathcal{B}\boldsymbol{m}_{\mathrm{r}}^{\mathrm{ext}} \qquad (7)$$

definiert werden, wobei $\boldsymbol{S}(\cdot)$ der schiefsymmetrische Matrixoperator für das Vektorprodukt ist. Da die äußere Kraft in $\mathcal{B}$

gegeben ist, ist keine weitere Isolierung für das Kontaktglied aufgrund der Restkomponenten erforderlich. Diese Lösung kann pseudoinvers sein. Die korrekte Kontaktstelle kann unter der Annahme der vollständigen Kenntnis der Geometrie und der Oberflächen der Glieder gefunden werden. Der Kontaktpunkt kann durch den Schnitt der Kraftwirkungslinie mit dem geometrischen Modell gefunden werden.

Die Kraftwirkungslinie durch $x_r$ kann als

$$l_r(\alpha) = x_r + \alpha(_{\mathcal{B}}f_r^{\text{ext}}/\|_{\mathcal{B}}f_r^{\text{ext}}\|) \qquad (8)$$

definiert werden, wobei $\alpha \in \mathbb{R}$ ein variabler Skalar ist. Im Prinzip sind alle Punkte auf der Kraftwirkungslinie gültige Kandidaten. Bei Kenntnis der Oberfläche $S_{ic}$ des Kontaktgliedes schneidet sich diese Linie jedoch an zwei Stellen mit $S_{ic}$. Ein Kontaktort kann als Schnittpunkt einer Kraftwirkungslinie und einer Roboteroberfläche definiert werden. Der erste Ort repräsentiert eine drückende Kraft auf die Roboter(glied)oberfläche und der zweite entspricht einer ziehenden Kraft aus der Oberfläche. Da keine Haftkräfte angenommen werden, ist im Allgemeinen der erste Schnittpunkt von Interesse. Entsprechend dieser Wahl kann der kleinere Wert des Skalars $\alpha = \alpha_r$ gefunden werden, der einer drückenden Kraft entspricht, um die richtige Kontaktstelle auf der Struktur $l_r(\alpha_r)$ zu berechnen. Da nun die externe Kontaktkraft

$$_{\mathcal{B}}\tau_r^{\text{ext}}$$

im Basisraum ausgedrückt wird, ergibt sich direkt die Größe $_{\mathcal{B}}\tau_r^{\text{ext}}$ der Kontaktkraft entlang der Struktur, die an dem Punkt $l_r(\alpha_r)$ angreift.

Auf ähnliche Weise können externe Kräfte und/oder Momente an einem Endeffektor-Kontaktpunkt als

$$_{\mathcal{B}}\tau_{ee}^{\text{ext}} = \text{Ad}_{g_{\mathcal{B}}^{\mathcal{E}}}^T \, _{\mathcal{E}}\tau_{ee}^{\text{ext}}$$

auf ein Roboterbezugssystem $\mathcal{B}$ abgebildet werden, wobei $_{\mathcal{B}}\tau_{ee}^{\text{ext}} = [_{\mathcal{B}}f_{ee}^{\text{ext}\,T} \;\; _{\mathcal{B}}m_{ee}^{\text{ext}\,T}]^T$.

Analog zu (7) kann ein minimaler Abstand von einem Roboterbezugssystem $\mathcal{B}$ zu einer Kraftwirkungslinie als

$$x_{ee} = -S(_{\mathcal{B}}f_{ee}^{\text{ext}})^{\#} \, _{\mathcal{B}}m_{ee}^{\text{ext}}$$

definiert werden. Diese Lösung kann pseudoinvers sein.

Mit Bezug auf (8) kann ein durch den Skalar $\alpha_{ee}$ angegebener Endeffektor-Kontaktpunkt $l_{ee}(\alpha_{ee})$ und iterativ können weitere Kontaktpunkte bestimmt werden, um die erforderlichen Kraft- und/oder Momentsensoren und die interessierenden Bereiche abzudecken, beispielsweise um einen Kontakt $l_{ui}(\alpha_{ui})$ auf der Benutzerschnittstelle zu finden. Einschränkungen oder Beschränkungen hinsichtlich einer Anzahl der von der Kollision betroffenen Gelenke werden vermieden und es besteht bei günstiger Platzierung der Kraft- und/oder Momentsensor sogar die Möglichkeit, eine Punktkollision zu erkennen und zu lokalisieren, die sich in der Nähe der Roboterbasis und sogar unterhalb des ersten Gelenks des Roboters befindet. Es kann wenigstens ein zusätzliches passives mechanisch gebundenes Gelenk modelliert werden. Mithilfe des wenigstens ein zusätzlichen passiven mechanisch gebundenen Gelenks kann wenigstens ein virtueller Kraft- und/oder Momentsensor modelliert werden. Das wenigstens eine zusätzliche passive mechanisch gebundene Gelenk und/oder der wenigstens eine zusätzliche virtuelle Kraft- und/oder Momentsensor können/kann in die Beobachterdynamik integriert und als interner Sensor und als ein Teil des Roboters behandelt werden.

Das erfindungsgemäße Verfahren erfordert nicht unbedingt Gelenkmomentsensoren. Vielmehr kann das Verfahren zusammen mit einer Reibungskompensation auf Gelenkebene verwendet werden, um die externen Interaktionskräfte und/oder Interaktionsmomente eines Roboters auf einfache Weise zu extrahieren. In diesem Fall können Motorstromsignale mit Kraft-Moment-Signalen kombiniert werden, um wie zuvor die externen Interaktionskräfte und/oder Interaktionsmomente zu schätzen.

Der Roboter kann eine Basis, wenigstens ein Glied, wenigstens ein Gelenk und/oder einen Endeffektor aufweisen, die eine reale kinematische Roboterstruktur bilden können. Die Basis kann einem Standort des Roboters zugeordnet sein. Die Basis kann einen festen Bezugspunkt des Roboters bilden. Die Gelenke können dazu ausgelegt sein, ein Glied mit der Basis, jeweils zwei Glieder miteinander und/oder den Endeffektor mit einem Glied gelenkig zu verbinden. Der Roboter kann wenigstens einen Antrieb aufweisen. Der wenigstens eine Antrieb kann einen Motor und ein Getriebe aufweisen. Der wenigstens eine Antrieb kann dazu ausgelegt sein, das wenigstens eine Glied und/oder den Endeffektor zu bewegen. Der wenigstens eine Antrieb kann steuerungstechnisch und/oder regelungstechnisch kontrollierbar sein. Der Roboter kann wenigstens einen Kraft- und/oder Momentsensor aufweisen. Der Roboter kann eine Kontrolleinrichtung aufweisen. Die Kontrolleinrichtung kann zum Ausführen eines Computerprogramms ausgelegt sein. Die Kontrolleinrichtung kann zum Kontrollieren des wenigstens einen Antriebs ausgelegt sein. Die Kontrolleinrichtung kann einen Prozessor, einen Arbeitsspeicher, einen Datenspeicher, wenigstens einen Signaleingang und/oder wenigstens einen Signalausgang aufweisen. Der wenigstens eine Kraft- und/oder Momentsensor kann mit dem wenigstens einen Signaleingang signalleitend verbunden sein. Der wenigstens eine Signalausgang kann mit dem wenigstens einen Antrieb signalleitend verbunden sein. Der Roboter kann eine Benutzerschnittstelle aufweisen. Die Benutzerschnittstelle kann zur Eingabe von Anweisungen durch einen Benutzer und/oder Ausgabe von Informationen an einen Benutzer ausgelegt sein. Der wenigstens eine Kraft- und/oder Momentsensor des Roboters kann der Basis, der Benutzerschnittstelle, dem Endeffektor, einem Glied und/oder einem Gelenk zugeordnet sein. Der wenigstens eine Kraft- und/oder Momentsensor des Roboters kann auch als realer Kraft- und/oder Momentsensor bezeichnet werden. Der Roboter kann ein autonomer mobiler Roboter, ein humanoider Roboter, ein Portalroboter, ein Industrieroboter, ein Leichtbauroboter, ein Medizinroboter, ein Personal Robot, ein Serviceroboter und/oder ein Transportroboter sein. Der Roboter kann ein kraft- und/oder momentgeregelter Roboter sein. Der Roboter kann dazu ausgelegt sein, mit einem in einem gemeinsamen Arbeitsraum mit einem Menschen zusammenzuarbeiten.

Das Computerprogrammprodukt kann in gespeicherter, installierbarer, installierter, herunterladbarer, verteilbarer und/oder ausführbarer Form vorliegen. Das Computerprogrammprodukt kann auf einer Kontrolleinrichtung eines Roboters installierbar, installiert und/oder ausführbar sein.

Mit der Erfindung werden im Stand der Technik bekannte Nachteile reduziert oder vermieden. Eine Implementierung/Realisierung von fortschrittlicheren Kollisionsreaktionsstrategien wird ermöglicht. Umfangreiche Informationen über die Ebene der Kollision, insbesondere am Endeffektor und/oder an der Struktur, können geliefert werden. Wenn z. B. eine Kollision auf der Struktur erkannt und identifiziert werden kann, kann in diesem Fall eine spezifische Logik/Heuristik für eine Kollisionsreaktionsstrategie in Abhängigkeit von der Kollisionsebene entwickelt werden. Der Parameter kann einen Schwellwertvektor darstellen, um die Robustheit der Kollisionserkennung gegenüber nicht modellierten Dynamiken zu erhöhen, und er eliminiert falsch positive Ergebnisse.

Verschiedene Anwendungen und Szenarien könnten von der Schätzung der externen Endeffektor-Kräfte und der absichtlichen Benutzerinteraktionen profitieren, z. B. wenn dem Roboter eine Aufgabe, die Kräfte beinhaltet, durch Demonstration beigebracht wird. Dies liegt daran, dass alle Benutzerinteraktionen von den externen Kräften der Aufgabe isoliert werden können, da diese durch zwei individuelle Reststöße geschätzt werden. Die Annahme der Abwesenheit von externen Drehmomenten gilt nicht generell an allen Kontakten. In der Tat könnte jeder Ort/Punkt Kräfte und Drehmomente enthalten (kompletter Stoß), da sie voneinander isoliert sind und nicht von anderen Kontaktkräften beeinflusst werden. Der Roboter kann z. B. eine Aufgabe ausführen, die das Ausüben von Drehmomenten in der Umgebung erfordert, während die Kontaktkollision an der Struktur lokalisiert wird. In diesem Fall kann eine vollständige Schätzung des externen End-Effektors erhalten werden, ohne jedoch den Ort des Kontakts anzugeben. Um mehr als n externe Kräfte in einem mechanischen System mit einem Freiheitsgrad f=n gleichzeitig zu erfassen und zu isolieren, müssen die zusätzlichen Freiheitsgrade, die mit der redundanten Abtastung zusammenhängen, ebenfalls entkoppelt werden. Die Verwendung der geschätzten verallgemeinerten Beschleunigung zur Kompensation der dynamischen Effekte für die zusätzlichen Abtasteinrichtungen führt zu einem gekoppelten System. Der erweiterte Beobachter ist nicht auf die Erkennung und Isolierung von n externen Kräften und/oder Momenten beschränkt, sondern kann gleichzeitig mehr als die Anzahl der aktiven Freiheitsgrade, nämlich $\bar{n}$, einschließlich der zusätzlichen Dimensionen der Kraft-Momenten-Sensoren, schätzen. Durch die Einführung zusätzlicher virtueller Koordinaten (Gelenke) erhöht sich auch die Dimension der dynamischen Gleichungen. Da eine Matrixinversion entfallen kann, kann eine erforderliche Rechenleistung reduziert werden.

Nachfolgend werden Ausführungsbeispiele der Erfindung unter Bezugnahme auf Figuren näher beschrieben, dabei zeigen schematisch und beispielhaft:

Fig. 1    einen Roboter mit einer Basis, Gliedern, Gelenken, einem Endeffektor, Kraft- und/oder Momentsensoren und virtuelle, zwangsgeführte, sechsdimensionale Gelenke zur Visualisierung eines Konzepts der Einbeziehung einer Sensor-Redundanz unter Annahme zusätzlicher Zustände (DOF) für die Sensoren,

Fig. 2    ein Definieren einer Kontaktstelle durch einen Schnittpunkt zwischen einer Kraftwirkungslinie und einer Roboterstruktur zur Multikontaktlokalisierung,

Fig. 3    ein dynamisches Entkopplungsverhalten mit zusätzlichen virtuellen Kraft- und/oder Momentsensoren im Falle einer kontinuierlich wirkenden Einzel- DOF-Störung,

Fig. 4    experimentelle Ergebnisse zur dynamischen Identifikation und Lokalisierung von Mehrfachkontakten

Fig. 5    eine experimentelle Auswertung von Einzel- und Mehrfachkontakten an verschiedenen Punkten entlang eine Roboterstruktur,

Fig. 6    einen humanoiden Roboter mit realen Kraft- und/oder Momentsensoren, die als passive mechanisch gebundene Gelenke zusammen mit einer Roboterdynamik und einer Roboterkinematik modelliert sind, und

Fig. 7    einen Erkundungsroboter mit realen Kraft- und/oder Momentsensoren, die als passive mechanisch gebundene Gelenke zusammen mit einer Roboterdynamik und einer Roboterkinematik modelliert sind.

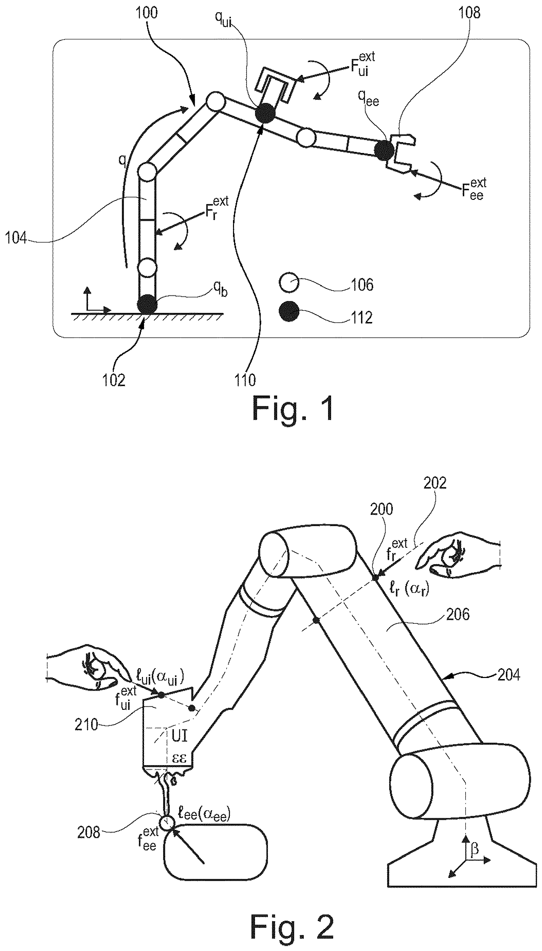

Fig. 1 zeigt einen Roboter 100, der beispielsweise als Industrieroboter ausgeführt sein kann, mit einer Basis 102, Gliedern, wie 104, Gelenken 106, einem Endeffektor 108, einer Benutzerschnittstelle 110, Kraft- und/oder Momentsensoren und virtuelle, zwangsgeführte, sechsdimensionale Gelenke 112 zur Visualisierung eines Konzepts der Einbeziehung einer Sensor-Redundanz unter Annahme zusätzlicher Zustände (DOF) für die Sensoren.

Die Kraft- und/oder Momentsensoren des Roboters 100 werden auch als reale Kraft- und/oder Momentsensoren bezeichnet, die mithilfe der Gelenke 112 modelliert sind. Mithilfe der Kraft- und/oder Momentsensoren und der Gelenke 112 können externe Interaktionskräfte und/oder Interaktionsmomente des Roboters 100 bestimmt werden. Dazu werden die Gelenke 112 zusammen mit einer Roboterdynamik und einer Roboterkinematik modelliert.

Um die Roboterdynamik zusammen mit dem Modell des Kraft- und/oder Momentsensors zu modellieren, werden die Koordinaten des Roboters 100 verallgemeinert als

$$\bar{q} = \begin{bmatrix} q_{\mathrm{b}} \\ q \\ q_{\mathrm{ui}} \\ q_{\mathrm{ee}} \end{bmatrix}$$

definiert, wobei $q_b \in \Re^{n_b}$ die Koordinaten sind, um einen an der Basis 102 angeordneten realen Kraft- und/oder Momentsensor, der auch als Basissensor bezeichnet werden kann, zu berücksichtigen. Im Fall $n_b = 6$ handelt es sich um einen Kraft- und/oder Momentsensor mit einem Freiheitsgrad f=6. Ähnlich verhält es sich für einen an einer Benutzerschnittstelle 110 angeordneten Kraft- und/oder Momentsensor und/oder für einen an einem Endeffektor 108 angeordneten Kraft- und/oder Momentsensor mit $q_{UI} \in \Re^{n_{UI}}$ bzw. $q_{ee} \in \Re^{n_{ee}}$. Die Koordinaten der betätigten Gelenke 106 werden als $q \in \Re^n$ bezeichnet.

Durch Einführung dieser verallgemeinerten Koordinaten sind die Kraft- und/oder Momentsensoren nicht nur real vorhanden, sondern auch virtuell in einem dynamischen Modell des Roboters 100 enthalten.

Das dynamische Modell des Roboters 100 einschließlich des Modells des wenigstens einen Kraft- und/oder Momentsensors wird als

$$\bar{M}(\bar{q})\ddot{\bar{q}} + \bar{C}(\bar{q}, \dot{\bar{q}})\dot{\bar{q}} + \bar{g}(\bar{q}) = H\tau + \bar{\tau}^{\mathrm{ext}} + A(\bar{q})^T \lambda \qquad (1)$$

$$A(\bar{q})\dot{\bar{q}} = 0 \qquad\qquad (2)$$

definiert, wobei der Term $A(\bar{q})^T \lambda$ die Zwangskräfte der zusätzlichen Gelenke 106 darstellt und $\bar{M} \in \Re^{\bar{n} \times \bar{n}}$, $\bar{C} \in \Re^{\bar{n} \times \bar{n}}$ und $\bar{g} \in \Re^{\bar{n}}$ die Roboter-Massenmatrix, die Coriolis- und Zentrifugalmatrix und der Gravitationsvektor einschließlich des Modells des wenigstens einen Kraft- und/oder Momentsensors darstellen.

Weiterhin stellt $\overline{\tau} = \boldsymbol{H}\tau$ die verallgemeinerten Betätigungskräfte dar und $\overline{\tau}^{\text{ext}} \in \mathfrak{R}^{\overline{n}}$ die erweiterten verallgemeinerten externen Kräfte:

$$\overline{\tau}^{\text{ext}} = \begin{bmatrix} \boldsymbol{\tau}_{\text{b}}^{\text{ext}} \\ \boldsymbol{\tau}^{\text{ext}} \\ \boldsymbol{\tau}_{\text{ui}}^{\text{ext}} \\ \boldsymbol{\tau}_{\text{ee}}^{\text{ext}} \end{bmatrix}$$

Externe Kräfte und/oder Momente an den Stellen *b, ui* und *ee* am Roboter 100 werden als

$$\tau_{\text{b}}^{\text{ext}} = \begin{bmatrix} \boldsymbol{f}_{\text{b}}^{\text{ext}} \\ \boldsymbol{m}_{\text{b}}^{\text{ext}} \end{bmatrix}, \quad \tau_{\text{ui}}^{\text{ext}} = \begin{bmatrix} \boldsymbol{f}_{\text{ui}}^{\text{ext}} \\ \boldsymbol{m}_{\text{ui}}^{\text{ext}} \end{bmatrix}, \quad \tau_{\text{ee}}^{\text{ext}} = \begin{bmatrix} \boldsymbol{f}_{\text{ee}}^{\text{ext}} \\ \boldsymbol{m}_{\text{ee}}^{\text{ext}} \end{bmatrix}$$

definiert, wobei $\boldsymbol{f}_{\text{b}}^{\text{ext}}$, $\boldsymbol{f}_{\text{ui}}^{\text{ext}}$, $\boldsymbol{f}_{\text{ee}}^{\text{ext}} \in \mathbb{R}^3$ die Kraftkomponenten und $\boldsymbol{m}_{\text{b}}^{\text{ext}}$, $\boldsymbol{m}_{\text{ui}}^{\text{ext}}$, $\boldsymbol{m}_{\text{ee}}^{\text{ext}} \in \mathbb{R}^3$ die Momentkomponenten repräsentiert, die an der Basis 102, an der Benutzerschnittstelle 110 bzw. an dem Endeffektor 108 wirken.

In Fig. 1 bezeichnet $F_{\text{ui}}^{\text{ext}}$ eine Benutzerinteraktion, $F_{\text{r}}^{\text{ext}}$ eine Umgebungs-/Benutzerinteraktion und $F_{\text{ee}}^{\text{ext}}$ eine Arbeitskraft.

Fig. 2 zeigt ein Definieren einer Kontaktstelle 200 durch einen Schnittpunkt zwischen einer Kraftwirkungslinie 202 und einer Roboterstruktur 204 zur Multikontaktlokalisierung.

Entlang der Roboterstruktur 204 aufgebrachte resultierende externe Kräfte und/oder Momente werden in einem Roboterbezugssystem als

$$_{\mathcal{B}}\boldsymbol{\tau}_{\text{r}}^{\text{ext}} = \boldsymbol{\tau}_{\text{b}}^{\text{ext}} - \text{Ad}_{g_{\mathcal{B}}^{\mathcal{U}\mathcal{I}}}^{T} \boldsymbol{\tau}_{\text{ui}}^{\text{ext}} - \text{Ad}_{g_{\mathcal{B}}^{\mathcal{E}\mathcal{E}}}^{T} \boldsymbol{\tau}_{\text{ee}}^{\text{ext}} \qquad (6)$$

definiert, wobei

$$_{\mathcal{B}}\tau_{\text{r}}^{\text{ext}} = [_{\mathcal{B}}\boldsymbol{f}_{\text{r}}^{\text{ext}T} \;\; _{\mathcal{B}}\boldsymbol{m}_{\text{r}}^{\text{ext}T}]^{T}, \text{Ad}_{g_{\mathcal{B}}^{\mathcal{U}\mathcal{I}}}$$

die Adjunkte der Transformation vom Basisraum $\mathcal{B}$ zum Benutzeroberflächenraum $\mathcal{U}\mathcal{I}$ und

$$\text{Ad}_{g_{\mathcal{B}}^{\mathcal{E}\mathcal{E}}}$$

die Adjunkte zwischen den beiden Räumen $\mathcal{B}$ und $\varepsilon\varepsilon$ ist. Außerdem stellen

$$_{\mathcal{B}}\boldsymbol{f}_{\text{r}}^{\text{ext}} \in \mathbb{R}^3$$

und

$$_{\mathcal{B}}\boldsymbol{m}_{\text{r}}^{\text{ext}} \in \mathbb{R}^3$$

die Kraft- bzw. Momentkomponenten dar, die auf die Struktur 204 ausgeübt werden und im Basisraum ausgedrückt werden. In (6) wurden die äußeren Kräfte an den anderen Stellen der Interaktion (ui, ee) isoliert. Die Kontaktstelle 200 kann unter der Annahme gefunden/bestimmt werden, dass das lokale Moment an der Kontaktstelle 200 gleich Null ist, was der typische Fall für impulsive Kollisionen und externe Kräfte und/oder Momente ist. Diese Annahme gilt aber auch für viele Situationen in der Praxis. Die Kontaktstelle 200 entlang der Struktur 204 kann mit Hilfe der erhaltenen externen Kräfte und/oder Momente aus (6) extrahiert werden.

Dementsprechend kann ein Vektor von einem Roboterbezugssystem bis zu einer Kraftwirkungslinie 202 als

$$x_{\mathrm{r}} = -S(_{\mathcal{B}}f_{\mathrm{r}}^{\mathrm{ext}})^{\#} {}_{\mathcal{B}}m_{\mathrm{r}}^{\mathrm{ext}} \qquad (7)$$

definiert werden, wobei $S(\cdot)$ der schiefsymmetrische Matrixoperator für das Vektorprodukt ist. Da die äußere Kraft in $\mathcal{B}$ gegeben ist, ist keine weitere Isolierung für das Kontaktglied 206 aufgrund der Restkomponenten erforderlich. Die korrekte Kontaktstelle 200 kann unter der Annahme der vollständigen Kenntnis der Geometrie und der Oberflächen der Glieder, wie 206, gefunden werden. Die Kontaktstelle 200 kann durch den Schnitt der Kraftwirkungslinie 202 mit dem geometrischen Modell der Struktur 204 gefunden werden.

Die Kraftwirkungslinie 202 durch $x_{\mathrm{r}}$ wird als

$$l_{\mathrm{r}}(\alpha) = x_{\mathrm{r}} + \alpha(_{\mathcal{B}}f_{\mathrm{r}}^{\mathrm{ext}}/\|_{\mathcal{B}}f_{\mathrm{r}}^{\mathrm{ext}}\|) \qquad (8)$$

definiert, wobei $\alpha \in \mathbb{R}$ ein variabler Skalar ist. Im Prinzip sind alle Punkte auf der Kraftwirkungslinie 200 gültige Kandidaten. Bei Kenntnis der Oberfläche $S_{i_c}$ des Kontaktgliedes 206 schneidet sich diese Linie jedoch an zwei Stellen mit $S_{i_c}$. Eine Kontaktstelle 200 kann als Schnittpunkt einer Kraftwirkungslinie 202 und einer Oberfläche der Roboterstruktur 204 definiert werden. Der erste Ort repräsentiert eine drückende Kraft auf die Roboter(glied)oberfläche und der zweite entspricht einer ziehenden Kraft aus der Oberfläche. Da keine Haftkräfte angenommen werden, ist im Allgemeinen der erste Schnittpunkt von Interesse. Entsprechend dieser Wahl kann der kleinere Wert des Skalars $\alpha = \alpha_{\mathrm{r}}$ gefunden werden, der einer drückenden Kraft entspricht, um die richtige Kontaktstelle 200 auf der Struktur $l_{\mathrm{r}}(\alpha_{\mathrm{r}})$ zu berechnen. Da nun die externe Kontaktkraft

$$_{\mathcal{B}}\tau_{\mathrm{r}}^{\mathrm{ext}}$$

im Basisraum ausgedrückt wird, ergibt sich direkt die Größe

$$_{\mathcal{B}}\tau_{\mathrm{r}}^{\mathrm{ext}}$$

der Kontaktkraft entlang der Struktur 202, die an dem Punkt $l_{\mathrm{r}}(\alpha_{\mathrm{r}})$ angreift.

Auf ähnliche Weise werden externe Kräfte und/oder Momente an einem Endeffektor-Kontaktpunkt als

$$_{\mathcal{B}}\tau_{\mathrm{ee}}^{\mathrm{ext}} = \mathrm{Ad}_{g_{\mathcal{B}}^{\varepsilon}}^{T} {}_{\varepsilon}\tau_{\mathrm{ee}}^{\mathrm{ext}}$$

auf ein Roboterbezugssystem $\mathcal{B}$ abgebildet, wobei

$$_{\mathcal{B}}\tau_{\mathrm{ee}}^{\mathrm{ext}} = [_{\mathcal{B}}f_{\mathrm{ee}}^{\mathrm{ext}T} \ {}_{\mathcal{B}}m_{\mathrm{ee}}^{\mathrm{ext}T}]^{T}.$$

Analog zu (7) wird ein minimaler Abstand von einem Roboterbezugssystem $B$ zu einer Kraftwirkungslinie 208 als

$$x_{\mathrm{ee}} = -S(_{\mathcal{B}}f_{\mathrm{ee}}^{\mathrm{ext}})^{\#} {}_{\mathcal{B}}m_{\mathrm{ee}}^{\mathrm{ext}}$$

definiert.

Mit Bezug auf (8) wird ein durch den Skalar $\alpha_{\mathrm{ee}}$ angegebener Endeffektor-Kontaktpunkt $l_{\mathrm{ee}}(\alpha_{\mathrm{ee}})$ bestimmt und iterativ werden weitere Kontaktpunkte bestimmt, um die erforderlichen Kraft- und/oder Momentsensoren und die interessierenden Bereiche abzudecken, beispielsweise um einen Kontakt $l_{\mathrm{ui}}(\alpha_{\mathrm{ui}})$ auf einer Benutzerschnittstelle 210 zu finden.

Die erfindungsgemäße Erweiterung eines momentbasierten Beobachters wird nachfolgend anhand von Simulationen und Experimenten dargestellt. Die Experimente wurden mit dem Leichtbauroboter SARA des Deutschen Zentrums für Luft- und Raumfahrt durchgeführt. Dieser Roboter vereint moderne Elektronik und Mechanik mit innovativen Regelungsverfahren. Ziel ist die funktionale Erweiterung des Ausgabegeräts Roboter zum vernetzten Sensor-Aktor-System in einer hochgradig von digitalen Überwachungs- und Steuerungsprozessen geprägten Fabrik der Zukunft.

SARA ist ein drehmomentgeregelter Roboterarm mit sieben Achsen und 12kg Traglast. Seine gute Faltbarkeit und kurze Handachse ermöglichen eine hervorragende Nutzung des großen Arbeitsraums und eine gute Erreichbarkeit von verschiedenen Seiten, selbst für große Werkstücke. Die feinfühlige Drehmomentsensorik und die auf Dynamik optimierten Antriebe eröffnen ein breites Einsatzspektrum und erlauben zügige Bearbeitungen. Eine redundante Kraftsensor-Kinematik erlaubt einerseits eine hochauflösende Kraft- und Drehmomentmessung am Roboterflansch, unabhängig von der Pose des Roboters. Andererseits ermöglicht sie die Messung von Kontaktkräften während des handgeführten Anlernbetriebs.

Mit SARA ist es möglich, Positions- und Krafttrajektorien simultan aufzuzeichnen. Dies beschleunigt die Programmierung durch Vormachen um ein Vielfaches und erlaubt eine wesentlich intuitivere Programmierung als durch nachträgliche, numerische Eingabe von Kraftrichtungen und Größen. Der Bediener zeigt dem Roboter also nicht nur, was er tun soll, sondern auch, wie er eine Aufgabe zu verrichten hat. Die Kombination von Sensorkinematik und hoher Bandbreite ermöglicht eine hochabgetastete Überwachung der Kraftverläufe bei Fügevorgängen. Dadurch können Fügefehler zukünftig schon während des Fügevorgangs erkannt werden. Experimente haben gezeigt, dass durch die neue Sensorkinematik Kontakte und Kollisionen am Endeffektor wesentlich früher, richtungsunabhängig und trennschärfer erkannt werden können. Dies erlaubt nicht nur dynamischere Fügevorgänge, sondern erhöht auch die Sicherheit im kollaborativen Betrieb. Die Erhöhung des Regeltaktes mit minimaler Latenz sowie die auf Dynamik optimierte Auslegung der Antriebe und Strukturen hat die Kraftregelung zu höchsten Leistungen geführt. So kann die kartesische Steifigkeit in beliebigen Raumrichtungen von 0 bis 20 000 N/m geregelt werden, was der Steifigkeit der klassischen Positionsregelung nahekommt. Dies macht sich bei der Beherrschung instabiler Kontakte bemerkbar, wie bei Arbeiten mit einem konvexen Werkzeug entlang einer konvexen Kante.

Eine endlos drehbare siebte Achse mit Energie- und Datenübertragung sowie ein integrierter Schnellwechselmechanismus mit Werkzeugerkennung, Energie- und Datenanschluss erlauben die selbständige Rekonfiguration für komplexe Aufgabenfolgen. Eine Nutzereingabe mit Tasten und Display am Roboter soll die Programmierung vom PC aus zukünftig weitgehend durch intuitive Eingaben vor Ort ersetzen. Versteckt in der Struktur des Roboters arbeiten zwei Vierfach-Gelenkreglerblöcke mit 8kHz Systemtakt. Die Gelenkregler sind direkt per PCI Express mit dem Steuerungsrechner verbunden, der im gleichen Takt die Gesamtarm Regelung betreibt. Diese Architektur erlaubt die Echtzeit-Überwachung aller inneren Größen sowie jederzeit die Einbindung weiterer Komponenten über mPCIe-Steckplätze. Eine integrierte Kondensatorbank ermöglicht die Weiterverwendung der beim Bremsen rückgespeisten Energie (KERS), und ein mechanisches Überlastschutz-System bewahrt den Roboter vor Schäden bei ungewollten harten Kollisionen.

In SARA sind alle Kraft-Momenten-Sensoren vollständig in die mechanische Struktur integriert. Diese Sensoren sind vom Dehnungsmessstreifen-basierten Typ mit optimiertem Design, um die Sensorauflösung zu erhöhen. Der Roboter verfügt über zwei 6-DOF-Kraft-Momenten-Sensoren, einen in der Basis und einen weiteren im Handgelenk des Roboters. Außerdem verfügt das System über zusätzliche Sensoren in den dazwischen liegenden Drehgelenken. Somit ist das System mit einer Instrumentierung ausgestattet, die 6 + 4 + 6 = 16 Signale liefert.

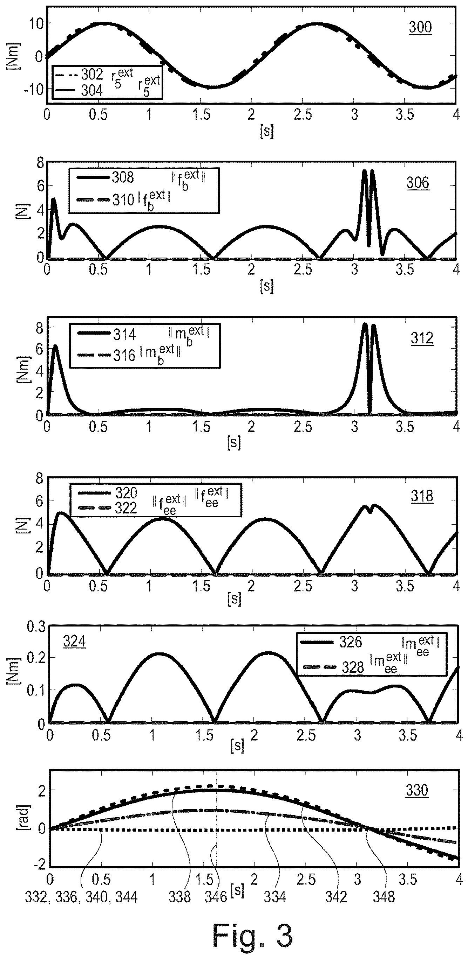

In der folgenden Simulation auf SARA wird eine sinusförmige Störung mit einer Amplitude von 10 Nm als externes Moment auf das Gelenk fünf aufgebracht, wie in Fig. 3 aus dem Diagramm 300 ersichtlich. In dem Diagramm 300 sind das tatsächliche externe Moment 302 und das geschätzte externe Moment 304 in zeitlichem Verlauf dargestellt. In dem Diagramm 306 sind ein Kraftfehler 308 an der Basis bei einem Verfahren gemäß dem Stand der Technik und ein Kraftfehler 310 an der Basis beim Ausführen des erfindungsgemäßen Verfahrens, bei dem in (5) keine Koppelung vorhanden und der daher ≈ 0 ist, in zeitlichem Verlauf dargestellt. In dem Diagramm 312 ist ein Momentfehler 314 an der Basis bei einem Verfahren gemäß dem Stand der Technik und ein Momentfehler 316 an der Basis beim Ausführen des erfindungsgemäßen Verfahrens in zeitlichem Verlauf dargestellt. In dem Diagramm 318 sind ein Kraftfehler 320 an dem Endeffektor bei einem Verfahren gemäß dem Stand der Technik und ein Kraftfehler 322 an dem Endeffektor beim Ausführen des erfindungsgemäßen Verfahrens in zeitlichem Verlauf dargestellt. In dem Diagramm 324 ist ein Momentfehler 326 an dem Endeffektor bei einem Verfahren gemäß dem Stand der Technik und ein Momentfehler 328 an dem Endeffektor beim Ausführen des erfindungsgemäßen Verfahrens in zeitlichem Verlauf dargestellt. Aus dem Diagramm 330 ist die während dem Aufbringen des externen Moments ausgeführte Trajektorie auf Gelenkebene ersichtlich durch Darstellung der Position 332 des Gelenks 1, der Position 334 des Gelenks 2, der Position 336 des Gelenks 3, der Position 338 des Gelenks 4, der Position 340 des Gelenks 5, der Position 342 des Gelenks 6 und der Position 344 des Gelenks 7. Bei 346 ergibt sich eine minimale Anzahl von Bedingungen der Jakobi-Matrix. Bei 348 kreuzen sich die kinematischen Singularitäten.

Die Trajektorie beinhaltet sowohl die Konfiguration mit minimaler Zustandszahl als auch das Durchschreiten einer Singularität w. r. t. im gesamten kartesischen Raum des Endeffektors. Die externen Kräfte und Momente am Endeffektor und an der Roboterbasis werden gemäß dem Stand der Technik über die geschätzten generalisierten Beschleunigungen berechnet (6). Anschließend wird $\overset{\approx}{q}$ aus (6) verwendet, um eine parallele dynamische Berechnung auszuführen und die externen Kräfte und/oder Momente zu erhalten, der von den Kraft-Momenten-Sensoren wahrgenommen wird. Diese Strategie ist im Grunde äquivalent zur Verwendung von Newton-Euler-Berechnungen in Kombination mit den geschätzten Gelenkbeschleunigungen gemäß dem Stand der Technik. Da beide Ansätze den verallgemeinerten Impuls auf Gelenkebene verwenden, sind der vorgeschlagene erweiterte Beobachter und ein bekannter impulsbasierte Störungsbeobachter äquivalent zur Schätzung der externen Gelenkmomente. Allerdings unterscheiden sich die geschätzten externen kartesischen Kräfte und/oder Momente in beiden Ansätzen. In Fig. 3 ist die dynamische Kopplung im klassischen Ansatz deutlich erkennbar, dargestellt durch Kraft- und Momentfehler. Die Schätzung der Gelenkbeschleunigung $\overset{\approx}{q}$ stützt sich über das Residuum direkt auf die geschätzten externen Momente. Da das Residuum eine gefilterte Version der externen Momente erster Ordnung ist, wird bei Transienten ein Fehler vererbt. Folglich ist dieser Fehler in $\overset{\approx}{q}$ nichtlinear über $M(q)^{-1}$ gekoppelt. Außerdem ist deutlich zu erkennen, dass die in Fig. 3 dargestellten Fehler konfigurationsabhängig sind. Im Gegensatz dazu ist die erweiterte Beobachter-Struktur in der Lage, mit der Herausforderung der dynamischen Kopplung umzugehen, liefert vollständig entkoppelte externe Kraft- und Momentschätzungen und macht die Notwendigkeit von Beschleunigungsschätzungen überflüssig.

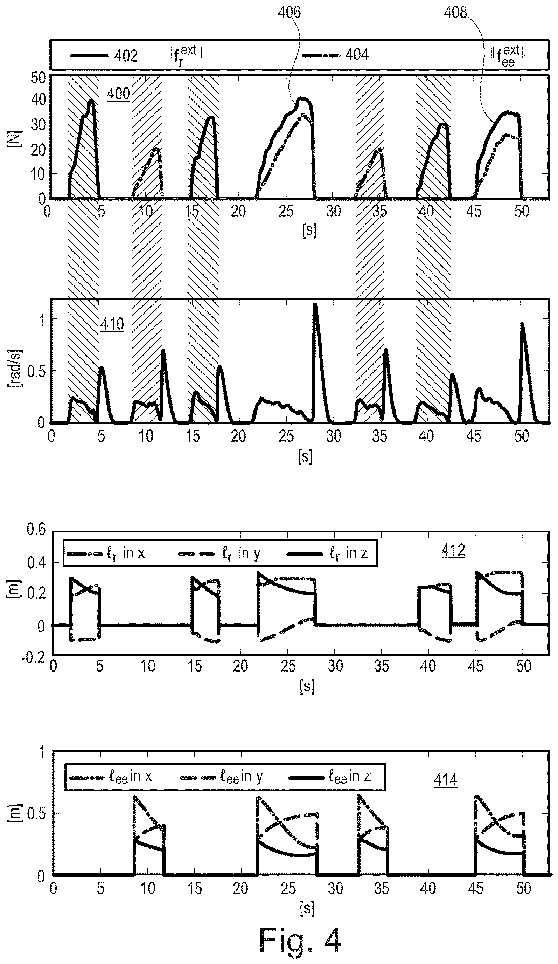

Fig. 4 zeigt experimentelle Ergebnisse zur dynamischen Identifikation und Lokalisierung von Mehrfachkontakten. Der Roboter wird im Modus der Impedanzregelung auf Gelenkebene betrieben, um eine bestimmte Konfiguration konform zu halten. In dem Diagramm 400 sind eine mithilfe des erfindungsgemäßen Beobachters geschätzte externe Kraft an der Roboterstruktur 402 und an dem Endeffektor 404 als Ergebnis der physikalischen Interaktion in zeitlichem Verlauf dargestellt. Multiple Kontakte sind bei 406 und 408 erkennbar. Nach dem Lösen der äußeren Kontakte wird die Ausgangskonfiguration wieder angefahren. Dies ist an der in dem Diagramm 410 in zeitlichem Verlauf dargestellten euklidische Norm $\|\dot{q}\|$ aller Gelenkgeschwindigkeiten zu erkennen, bei der nach dem Kontakt Hochgeschwindigkeitsphasen auftreten. Während dieser Phasen wird eine vollständige Entkopplung erreicht, was die theoretischen Ergebnisse bestätigt. Zusätzlich werden die Mehrfachkontakte unabhängig/getrennt entlang der Struktur und auf der Endeffektor-Ebene geschätzt. Wie bereits erwähnt, wird zur Erhöhung der Robustheit der Kollisionserkennung ein Schwellenwert verwendet, wobei keine Kontaktstelle unterhalb des definierten Kraftschwellenwertes angenommen wird.

Kontaktorte an der Roboterstruktur sind in dem Diagramm 412 dargestellt und Kontaktorte an dem Endeffektor sind in dem Diagramm 414 dargestellt.

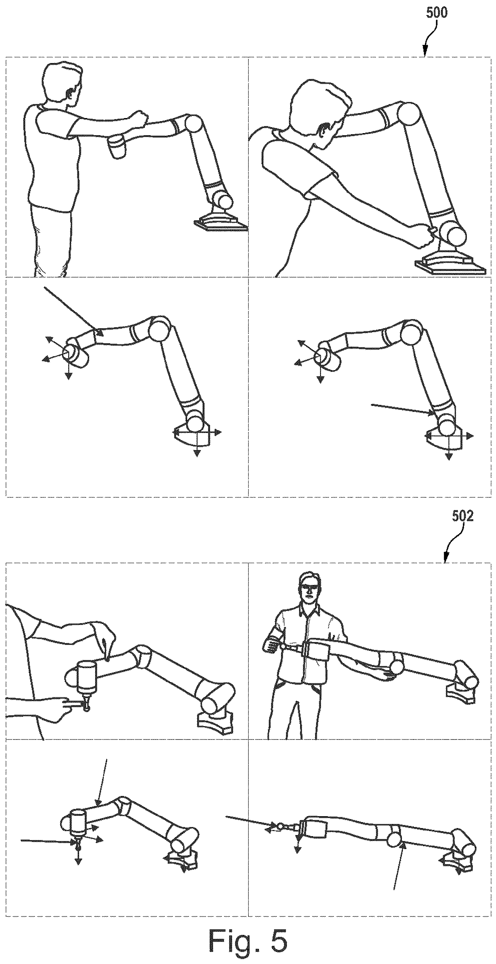

Fig. 5 zeigt eine experimentelle Auswertung an verschiedenen Punkten entlang eine Roboterstruktur, wobei die Erkennung des Kontaktpunkts in der Nähe der Roboterbasis sowie in der singulären Richtung hervorgehoben wird. Die Darstellung 500 bezieht sich auf Einzelkontakte, die Darstellung 502 bezieht sich auf Mehrfachkontakte.

In dieser Patentanmeldung wird ein einheitliches momentbasiertes Modell zur Schätzung externer Kräfte vorgestellt. Zusätzlich zu den Residuen auf Gelenkebene liefert der Ansatz ungekoppelte Kraft-Moment-Schätzungen im kartesischen Raum, wodurch diese Schätzungen unabhängig von der Gelenkkonfiguration sind und nicht von Singularitäten beeinflusst werden. Die Beobachterformulierung ermöglicht die einfache Integration zusätzlicher sensorischer Geräte an beliebigen Stellen der kinematischen Kette, z. B. in der Basis oder am Endeffektor. Das Modell eliminiert die Notwendigkeit von Beschleunigungsmessungen oder -schätzungen. Darüber hinaus können mehrere gleichzeitige externe Kontakte robust und in Echtzeit identifiziert und lokalisiert werden. Dynamische Simulationen und Experimente am DLR-Roboter SARA mit Kraft-Moment-Sensorik-Redundanz bestätigen die theoretischen Ansprüche und die Effektivität des Ansatzes.

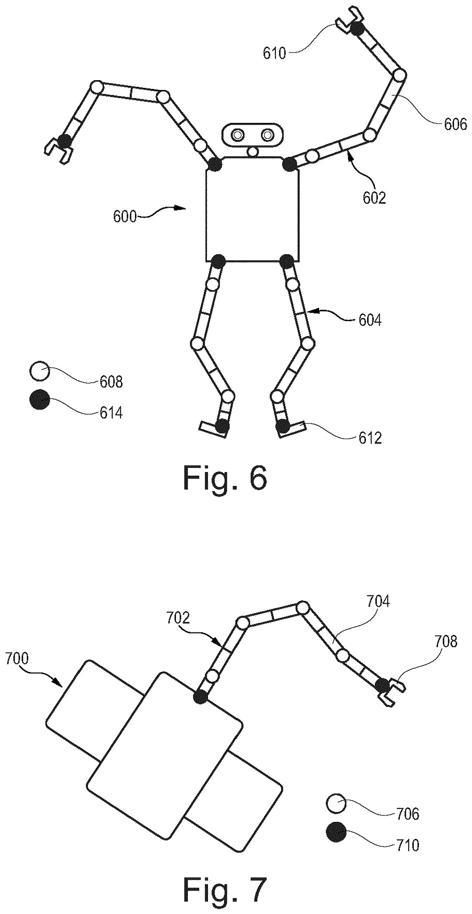

Fig. 6 zeigt einen humanoiden Roboter 600, der unter Ausführung des erfindungsgemäßen Verfahrens kontrollierbar ist, um externe Interaktionskräfte und/oder Interaktionsmomente des Roboters 600 zu bestimmen. Der Roboter 600 weist Arme, wie 602, und Beine, wie 604, mit Gliedern, wie 606, Gelenken 608 und Endeffektoren, wie 610, 612, auf. Die Arme 602 und Beine 604 können zum Einlernen des Roboters 600 von einem Benutzer geführt bewegt werden und insofern als Benutzerschnittstelle dienen. Der Roboter 600 weist Kraft- und/oder Momentsensoren auf, die als passive mechanisch gebundene Gelenke 614 zusammen mit einer Roboterdynamik und einer Roboterkinematik modelliert sind. Im Übrigen wird ergänzend insbesondere auf Fig. 1 bis Fig. 5 verwiesen.

Fig. 7 zeigt einen Erkundungsroboter 700, beispielsweise zum Erkunden des Weltraums, der unter Ausführung des erfindungsgemäßen Verfahrens kontrollierbar ist, um externe Interaktionskräfte und/oder Interaktionsmomente des Roboters 700 zu bestimmen. Der Roboter 700 weist einen Manipulator 702 mit Gliedern, wie 704, Gelenken 706 und einem Endeffektor 708 auf. Der Roboter 700 weist Kraft- und/oder Momentsensoren auf, die als passive mechanisch gebundene Gelenke 710 zusammen mit einer Roboterdynamik und einer Roboterkinematik modelliert sind. Im Übrigen wird ergänzend insbesondere auf Fig. 1 bis Fig. 5 verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

Bezugszeichen

| | |
|---|---|
| 100 | Roboter |
| 102 | Basis |
| 104 | Glied |
| 106 | Gelenke |
| 108 | Endeffektor |
| 110 | Benutzerschnittstelle |
| 112 | virtuelle Gelenke |
| | |
| 200 | Kontaktstelle |
| 202 | Kraftwirkungslinie |
| 204 | Roboterstruktur |
| 206 | Kontaktglied |
| 208 | Kraftwirkungslinie |
| 210 | Benutzerschnittstelle |
| | |
| 300 | Diagramm |
| 302 | tatsächliches externes Moment |
| 304 | geschätztes externes Moment |
| 306 | Diagramm |
| 308 | Kraftfehler |
| 310 | Kraftfehler |
| 312 | Diagramm |
| 314 | Momentfehler |
| 316 | Momentfehler |
| 318 | Diagramm |
| 320 | Kraftfehler |
| 322 | Kraftfehler |
| 324 | Diagramm |
| 326 | Momentfehler |
| 328 | Momentfehler |
| 330 | Diagramm |
| 332 | Position Gelenk 1 |
| 334 | Position Gelenk 2 |
| 336 | Position Gelenk 3 |
| 338 | Position Gelenk 4 |
| 340 | Position Gelenk 5 |
| 342 | Position Gelenk 6 |
| 344 | Position Gelenk 7 |
| 346 | minimale Anzahl von Bedingungen |
| 348 | Kreuzung kinematischer Singularitäten |
| | |
| 400 | Diagramm |
| 402 | Kraft an der Roboterstruktur |
| 404 | Kraft an dem Endeffektor |
| 406 | multiple Kontakte |
| 408 | multiple Kontakte |
| 410 | Diagramm |
| 412 | Diagramm |
| 414 | Diagramm |

| | |
|---|---|
| 500 | experimentelle Auswertung von Einzelkontakten |
| 502 | experimentelle Auswertung von Mehrfachkontakten |

| | |
|---|---|
| 600 | Humanoider Roboter |
| 602 | Arm |
| 604 | Bein |
| 606 | Glied |
| 608 | Gelenk |
| 610 | Endeffektor |
| 612 | Endeffektor |
| 614 | virtuelle Gelenke |

| | |
|---|---|
| 700 | Erkundungsroboter |
| 702 | Manipulator |
| 704 | Glied |
| 706 | Gelenk |
| 708 | Endeffektor |
| 710 | virtuelle Gelenke |

**Patentansprüche**

1. Verfahren zum Bestimmen externer Interaktionskräfte und/oder Interaktionsmomente eines Roboters (100, 600, 700) mithilfe wenigstens eines realen Kraft- und/oder Momentsensors und eines Modells des wenigstens einen Kraft- und/oder Momentsensors, **dadurch gekennzeichnet, dass** der wenigstens eine reale Kraft- und/oder Momentsensor als passives mechanisch gebundenes Gelenk (112, 614, 710) zusammen mit einer Roboterdynamik und einer Roboterkinematik modelliert wird.

2. Verfahren nach Anspruch 1, **dadurch gekennzeichnet, dass** der wenigstens eine Kraft- und/oder Momentsensor als passives mechanisch gebundenes Gelenk (112, 614, 710) mit einem einer Anzahl von Aufnahmerichtungen des wenigstens einen Kraft- und/oder Momentsensors entsprechenden Freiheitsgrad modelliert wird.

3. Verfahren nach wenigstens einem der vorhergehenden Ansprüche, **dadurch gekennzeichnet, dass** der wenigstens eine Kraft- und/oder Momentsensor und/oder das Modell des wenigstens einen Kraft- und/oder Momentsensor wenigstens einer vorgegebenen Stelle am Roboter (100, 600, 700), insbesondere einer Benutzerschnittstelle (110, 210), einer kinematischen Roboterstruktur (204) und/oder einem Endeffektor (108, 610, 612, 708), zugeordnet sind/ist.

4. Verfahren nach wenigstens einem der vorhergehenden Ansprüche, **dadurch gekennzeichnet, dass** das Verfahren dynamisch unter Entfall einer Beschleunigungsschätzung durchgeführt wird.

5. Verfahren nach wenigstens einem der vorhergehenden Ansprüche, **dadurch gekennzeichnet, dass** ein regelungstechnischer Beobachter mithilfe verallgemeinert definierter Koordinaten und eines dynamischen Modells des Roboters (100, 600, 700) dargestellt wird.

6. Verfahren nach wenigstens einem der vorhergehenden Ansprüche, **dadurch gekennzeichnet, dass** ein dynamisches Modell des Roboters (100, 600, 700) einschließlich des wenigstens einen virtuellen Kraft- und/oder Momentsensors als

$$\bar{M}(\bar{q})\ddot{\bar{q}} + \bar{C}(\bar{q}, \dot{\bar{q}})\dot{\bar{q}} + \bar{g}(\bar{q}) = H\tau + \bar{\tau}^{\text{ext}} + A(\bar{q})^T \lambda$$

$$A(\bar{q})\dot{\bar{q}} = 0$$

definiert wird.

7. Verfahren nach wenigstens einem der vorhergehenden Ansprüche, **dadurch gekennzeichnet, dass** externe Kräfte und/oder Momente an den Stellen *b, ui* und *ee* am Roboter (100, 600, 700) als

$$\tau_{\mathrm{b}}^{\mathrm{ext}} = \begin{bmatrix} \boldsymbol{f}_{\mathrm{b}}^{\mathrm{ext}} \\ \boldsymbol{m}_{\mathrm{b}}^{\mathrm{ext}} \end{bmatrix} \; , \; \tau_{\mathrm{ui}}^{\mathrm{ext}} = \begin{bmatrix} \boldsymbol{f}_{\mathrm{ui}}^{\mathrm{ext}} \\ \boldsymbol{m}_{\mathrm{ui}}^{\mathrm{ext}} \end{bmatrix} \; , \; \tau_{\mathrm{ee}}^{\mathrm{ext}} = \begin{bmatrix} \boldsymbol{f}_{\mathrm{ee}}^{\mathrm{ext}} \\ \boldsymbol{m}_{\mathrm{ee}}^{\mathrm{ext}} \end{bmatrix}$$

definiert werden.

**8.** Verfahren nach wenigstens einem der vorhergehenden Ansprüche, **dadurch gekennzeichnet, dass** ein erweitertes verallgemeinertes Moment des Roboters (100, 600, 700) einschließlich des Modells des wenigstens einen Kraft- und/oder Momentsensors als

$$\bar{p} = \bar{M}(\bar{q})\dot{\bar{q}}$$

definiert wird, sodass eine Beobachterdynamik in der Form

$$\dot{\hat{\bar{p}}} = \bar{\tau} - \bar{n}(\bar{q}, \dot{\bar{q}}) + \bar{r}(t)$$

$$\dot{\bar{r}} = \bar{K}_{\mathrm{o}}(\dot{\bar{p}} - \dot{\hat{\bar{p}}})$$

resultiert.

**9.** Verfahren nach wenigstens einem der vorhergehenden Ansprüche, **dadurch gekennzeichnet, dass** eine Kontaktstelle (200) als Schnittpunkt einer Kraftwirkungslinie (202) und einer Roboteroberfläche definiert wird.

**10.** Verfahren nach wenigstens einem der vorhergehenden Ansprüche, **dadurch gekennzeichnet, dass** externe Kräfte und/oder Momente an einem Endeffektor-Kontaktpunkt als

$$_{\mathcal{B}}\tau_{\mathrm{ee}}^{\mathrm{ext}} = \mathrm{Ad}_{g_{\mathcal{B}}^{\mathcal{E}}}^{T} \tau_{\mathrm{ee}}^{\mathrm{ext}}$$

auf ein Roboterbezugssystem abgebildet werden.

**11.** Verfahren nach wenigstens einem der vorhergehenden Ansprüche, **dadurch gekennzeichnet, dass** ein minimaler Abstand von einem Roboterbezugssystem zu einer Kraftwirkungslinie (208) als

$$\boldsymbol{x}_{\mathrm{ee}} = -S(_{\mathcal{B}}\boldsymbol{f}_{\mathrm{ee}}^{\mathrm{ext}})^{\#} \, _{\mathcal{B}}\boldsymbol{m}_{\mathrm{ee}}^{\mathrm{ext}}$$

definiert wird.

**12.** Verfahren nach wenigstens einem der vorhergehenden Ansprüche, **dadurch gekennzeichnet, dass** ein durch einen variablen Skalar $\alpha \in \mathbb{R}$ angegebener Endeffektor-Kontaktpunkt und iterativ weitere Kontaktpunkte bestimmt werden.

**13.** Verfahren nach wenigstens einem der vorhergehenden Ansprüche, **dadurch gekennzeichnet, dass** wenigstens ein zusätzliches passives mechanisch gebundenes Gelenk modelliert wird.

**14.** Roboter (100, 600, 700) mit wenigstens einem Glied (104, 606, 704), wenigstens einem Gelenk (106, 608, 706), wenigstens einem Kraft- und/oder Momentsensor und einer Kontrolleinrichtung, **dadurch gekennzeichnet, dass** der Roboter (100, 600, 700) zum Ausführen eines Verfahrens nach wenigstens einem der Ansprüche 1 bis 13 geeignet ist.

15. Computerprogrammprodukt, **dadurch gekennzeichnet, dass** das Computerprogrammprodukt Programmcodeabschnitte umfasst, mit denen ein Verfahren nach wenigstens einem der Ansprüche 1 bis 13 ausführbar ist, wenn das Computerprogrammprodukt mithilfe einer Kontrolleinrichtung eines Roboters (100, 600, 700) ausgeführt wird.

Fig. 1

Fig. 2

Fig. 3

Fig. 4

500

502

Fig. 5

Fig. 6

Fig. 7

Europäisches
Patentamt

European
Patent Office

Office européen
des brevets

# EUROPÄISCHER RECHERCHENBERICHT

Nummer der Anmeldung

**EP 22 17 5265**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | BUONDONNO GABRIELE ET AL: "Combining real and virtual sensors for measuring interaction forces and moments acting on a robot", 2016 IEEE/RSJ INTERNATIONAL CONFERENCE ON INTELLIGENT ROBOTS AND SYSTEMS (IROS), IEEE, 9. Oktober 2016 (2016-10-09), Seiten 794-800, XP033011492, DOI: 10.1109/IROS.2016.7759142 [gefunden am 2016-11-28] * Seite 794 - Seite 798 * ----- | 1-15 | INV. B25J9/16 |
| X,D | VORNDAMME JONATHAN ET AL: "Collision detection, isolation and identification for humanoids", 2017 IEEE INTERNATIONAL CONFERENCE ON ROBOTICS AND AUTOMATION (ICRA), IEEE, 29. Mai 2017 (2017-05-29), Seiten 4754-4761, XP033127341, DOI: 10.1109/ICRA.2017.7989552 [gefunden am 2017-07-21] * Seite 4754 - Seite 4759 * ----- | 1-15 | RECHERCHIERTE SACHGEBIETE (IPC) B25J G05B |
| A | SAMI HADDADIN ET AL: "Robot Collisions: A Survey on Detection, Isolation, and Identification", IEEE TRANSACTIONS ON ROBOTICS., Bd. 33, Nr. 6, 1. Dezember 2017 (2017-12-01), Seiten 1292-1312, XP055434488, US ISSN: 1552-3098, DOI: 10.1109/TRO.2017.2723903 * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| **Den Haag** | **17. Oktober 2022** | **De Santis, Agostino** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Vorndamme, Jonathan, Moritz Schappler, and Sami Haddadin. "Collision detection, isolation and identification for humanoids. 2017 IEEE International Conference on Robotics and Automation (ICRA). IEEE, 2017, 4754-4761

- Combining real and virtual sensors for measuring interaction forces and moments acting on a robot. **BUONDONNO, G. ; DE LUCA, A.** 2016 IEEE/RSJ International Conference on Intelligent Robots and Systems (IROS). IEEE, Oktober 2016, 794-800